# EUROPEAN PATENT APPLICATION

(11) **EP 3 094 070 A1**
(43) Date of publication of application: **16.11.2016**
(21) Application number: 15735595.9
(22) Date of filing: 07.01.2015
(51) Int. Cl.: H04N 1/00, G06F 3/048, G06F 13/00

(54) **PROGRAM, INFORMATION PROCESSING DEVICE, AND IMAGE PROCESSING SYSTEM**

(30) Priority: 09.01.2014 JP 2014002294
(71) Applicant: Ricoh Company, Ltd., Tokyo 143-8555 (JP)
(72) Inventor: KEMMOCHI, Eiji, Tokyo 143-8555 (JP); KASATANI, Kiyoshi, Tokyo 143-8555 (JP)
(74) Representative: Schwabe - Sandmair - Marx
(86) International application number: PCT/JP2015/050229
(87) International publication number: WO 2015/105118

(57) **Abstract**

A program executed by an information processing apparatus that provides an image, and has an image processing apparatus display the image, causes a processor of the information processing apparatus to execute a process. The process includes displaying a screen for confirming whether to continue communication with the image processing apparatus, on a display of the information processing apparatus, after a time specified by a user has elapsed since the communication with the image processing apparatus has been established; and disconnecting the communication in a case where a command to continue the communication is not received from the user after the screen has been displayed.

## Description

### [Technical Field]

The present disclosure relates to image processing systems that display images provided by information processing apparatuses on image processing apparatuses, and more specifically, a program, an information processing apparatus, and an image processing system that automatically disconnect communication between an information processing apparatus and an image processing apparatus.

### [Background Art]

Conventionally, in conferences in companies, educational institutions, administrative agencies, and the like, electronic blackboards have been used on which images drawn by users such as characters, digits, figures, and the like can be displayed on background images displayed on displays.

Also, a display image of a computer may be provided as a background image for such an electronic blackboard, to be displayed. Patent Document 1 discloses an example of a conventional technology that displays a display image provided by a computer, on another apparatus. The image display system disclosed in Patent Document 1 provides an image that is displayed on the display of a computer to a projector via a wireless or wired network, whereby the projector projects the image.

### [Disclosure of the Invention]

The technology disclosed in Patent Document 1 may be applied to an electronic blackboard so that a display image on a mobile PC used by a user is provided for the electronic blackboard via wireless communication. In such a case, if the user has stopped using the electronic blackboard, but forgets to disconnect the communication between the electronic blackboard and the mobile PC, the display image of the mobile PC remains displayed on the electronic blackboard, and there may be a risk in that confidential communication leaks.

Therefore, it is desirable to provide a program, an information processing apparatus, and an image processing system with which communication can be automatically disconnected between an image processing apparatus that can display an image provided by an information processing apparatus, and the information processing apparatus.

### [Means to Solve the Problem]

According to an embodiment, a program executed by an information processing apparatus that provides an image, and has an image processing apparatus display the image, causes a processor of the information processing apparatus to execute a process. The process includes displaying a screen for confirming whether to continue communication with the image processing apparatus, on a display of the information processing apparatus, after a time specified by a user has elapsed since the communication with the image processing apparatus has been established; and disconnecting the communication in a case where a command to continue the communication is not received from the user after the screen has been displayed.

### [Effects of the Invention]

According to at least one embodiment, the above steps executed by the information processing apparatus can automatically disconnect the communication between the image processing apparatus and the information processing apparatus.

### [Brief Description of the Drawings]

FIG. 1 is a diagram illustrating an example of an image processing system according to an embodiment;
FIG. 2 is a diagram illustrating an example of a hardware configuration of an information processing apparatus 120a;
FIG. 3 is a diagram illustrating an example of a hardware configuration of an image processing apparatus 110;
FIG. 4 is a diagram illustrating an example of a functional configuration of the information processing apparatus 120a and the image processing apparatus 110;
FIG. 5 is a diagram illustrating an example of a screen for setting automatic disconnection according to an embodiment;
FIG. 6 is a flowchart illustrating an example of a process executed by the information processing apparatus 120a according to an embodiment; and
FIG. 7 is a diagram illustrating an example of a screen for confirming communication disconnection.

### [Mode for Carrying out of the Invention]

In the following, embodiments will be described with reference to the drawings. Note that the present invention is not limited to the embodiments described below.

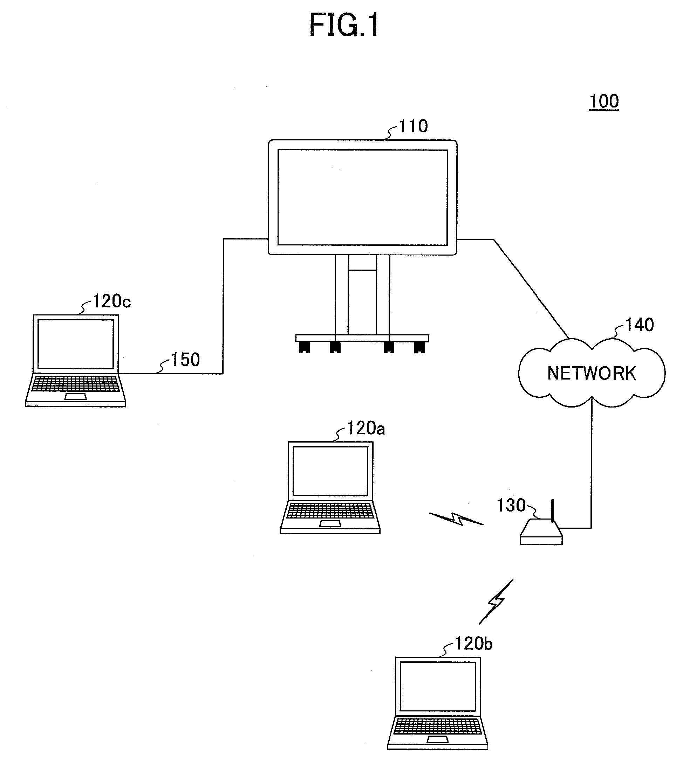

FIG. 1 is a diagram illustrating an example of an image processing system according to an embodiment. An image processing system 100 includes an image processing apparatus 110, information processing apparatuses 120a, 120b, and 120c, and an access point 130. The image processing apparatus 110 and the access point 130 are connected with a network 140. The network 140 may be configured to include a network such as a wireless LAN.

The image processing apparatus 110 can display images provided by the information processing apparatuses 120a, 120b, and 120c, and also can display an image drawn by a drawing operation of a user performed on a display screen, on the display screen of the image processing apparatus 110. The image processing apparatus 110 communicates with the information processing apparatuses 120a, 120b, and 120c via the network 140 and a cable 150. The image processing apparatus 110 can have virtual network computing (VNC) including a remote desktop function installed, so as to be capable of remote-controlling the information processing apparatuses 120a, 120b, and 120c with which communication have been established.

The information processing apparatuses 120a, 120b, and 120c provide images for the image processing apparatus 110. The information processing apparatuses 120a and 120b include wireless communication functions to transmit images to the access point 130 via wireless communication compliant with various wireless communication protocols, to provide the images for the image processing apparatus 110 via the network 140.

Also, the information processing apparatus 120c includes an interface to output an image signal, and can provide an image for the image processing apparatus 110 via the cable 150 such as a VGA cable that is connected to the interface.

In the embodiment illustrated in FIG. 1, although the information processing apparatuses are note PCs, the information processing apparatuses may be any other information processing apparatuses such as tablet PCs and smart phones.

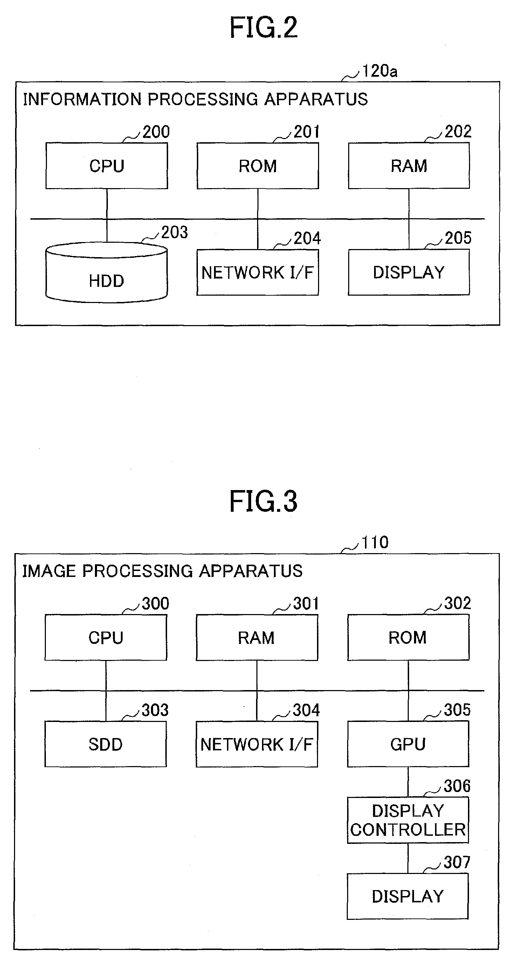

FIG. 2 is a diagram illustrating an example of a hardware configuration of the information processing apparatus 120a. In the following, the hardware configuration of the information processing apparatus 120a will be described with reference to FIG. 2. Note that the information processing apparatuses 120b and 120c have substantially the same hardware configuration as the information processing apparatus 120a, and the description is omitted.

The information processing apparatus 120a includes a CPU 200, a ROM 201, a RAM 202, an HDD 203, a network interface (I/F) 204, and a display 205.

The CPU 200 is a processor to execute various programs. The ROM 201 is a non-volatile storage device to store various data items. The RAM 202 is a volatile storage device to provide an execution space for various programs executed by the information processing apparatus 120a. The HDD 203 is a storage device that can store various data items including programs sustainably. The network I/F 204 is an interface through which data communication via the cable 150 and wireless data communication can be executed. The display 205 is a display unit for displaying various images.

The CPU 200 of the information processing apparatus 120a reads a program from the HDD 203 to load and execute the program on the RAM 202 under management of an OS, to implement functions, which will be described later, on the information processing apparatus 120a.

FIG. 3 is a diagram illustrating an example of a hardware configuration of the image processing apparatus 110. In the following, the hardware configuration of the image processing apparatus 110 will be described with reference to FIG. 3.

The image processing apparatus 110 includes a CPU 300, a RAM 301, a ROM 302, an SDD 303, a network I/F 304, a graphics processing unit (GPU) 305, a display controller 306, and a display 307.

The CPU 300 is a processor to execute various programs. The RAM 301 is a volatile storage device to provide an execution space for various programs executed by the image processing apparatus 110. The ROM 302 is a non-volatile storage device to store various data items. The SDD 303 is a storage device that can store various data items including programs sustainably. The CPU 300 of the image processing apparatus 110 reads a program from the SDD 303 to load and execute the program on the RAM 301 under management of an OS, to implement functions, which will be described later, on the image processing apparatus 110.

The network I/F 304 is an interface through which wired data communication and wireless data communication can be executed. The GPU 305 is a processor for image processing, and processes images to be displayed on the display 307. The display controller 306 controls the display 307 under control of the GPU 305.

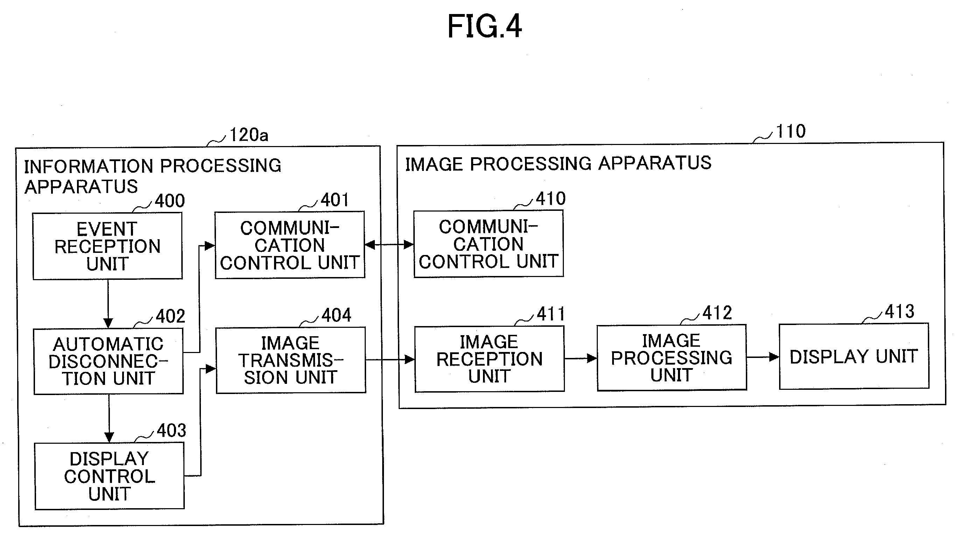

FIG. 4 is a diagram illustrating an example of a functional configuration of the information processing apparatus 120a and the image processing apparatus 110. In the following, the functional configuration of the information processing apparatus 120a and the image processing apparatus 110 will be described with reference to FIG. 4.

The information processing apparatus 120a includes an event reception unit 400, a communication control unit 401, an automatic disconnection unit 402, a display control unit 403, and an image transmission unit 404.

The event reception unit 400 receives an event issued by the operating system (OS) of the information processing apparatus 120a. Events received by the event reception unit 400 include, for example, an event that a click signal or a movement signal of a mouse as an input device has been received; an event that a signal of a pressed key on a keyboard has been received; an event that the display of the information processing apparatus 120a has been closed; an event that the power of a monitor has been turned off; and an event that displaying a locked screen or a screen saver has been started. In response to receiving such an event, the event reception unit 400 indicates the event having been received, along with the type of the event, to the automatic disconnection unit 402 .

The communication control unit 401 controls communication with the image processing apparatus 110. The communication control unit 401 transmits, in response to a command by a user, a request for connection to the image processing apparatus 110, to establish communication with the image processing apparatus 110. Also, the communication control unit 401 disconnects the communication with the image processing apparatus 110.

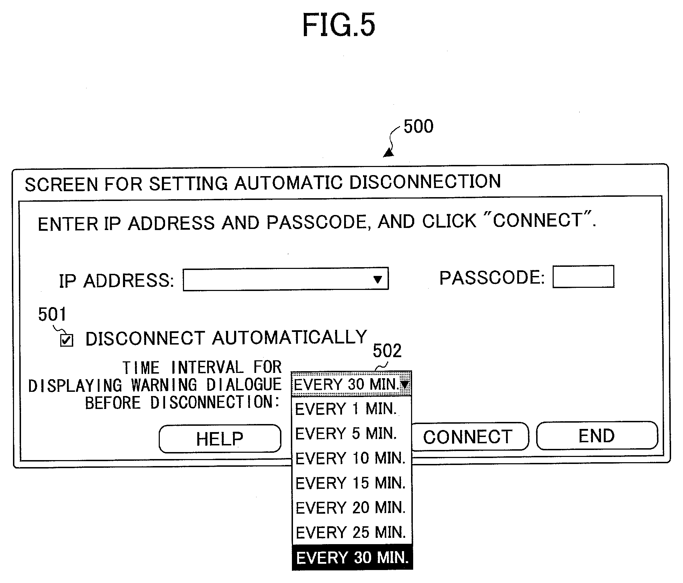

The automatic disconnection unit 402 functions so as to disconnect the communication with the image processing apparatus 110 automatically. If the user specifies automatic disconnection by using a screen for setting automatic disconnection illustrated in FIG. 5, the automatic disconnection unit 402 automatically disconnects the communication with the image processing apparatus 110 accordingly.

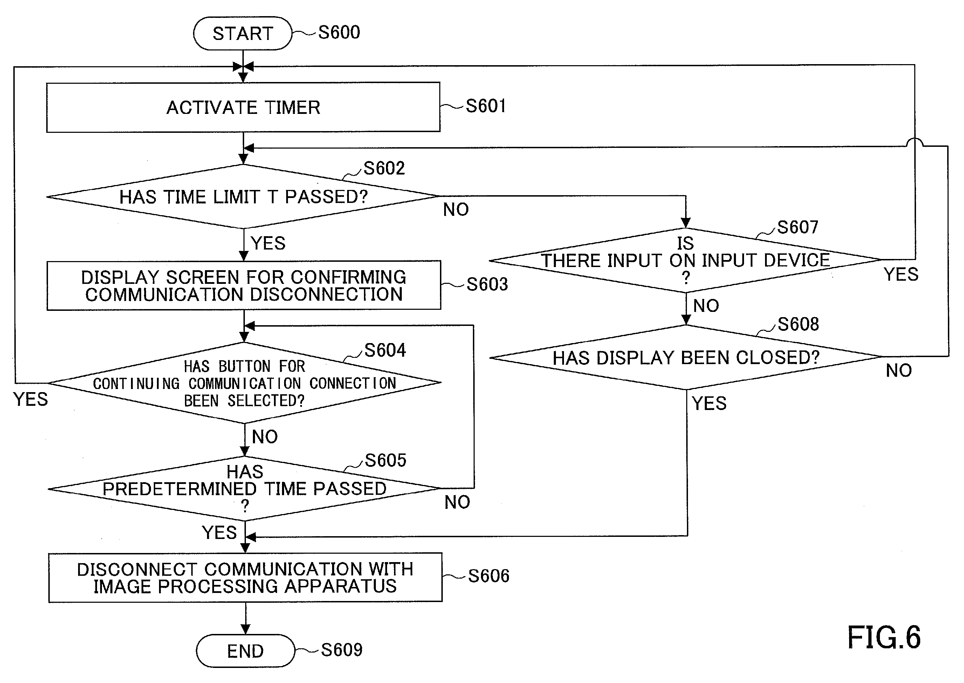

FIG. 5 is a diagram illustrating an example of a screen for setting automatic disconnection according to the embodiment. The screen for setting automatic disconnection 500 includes a check box 501 to specify whether to use the automatic disconnection function, and a pull-down menu 502. The pull-down menu 502 is a menu for setting a display time interval of the screen for confirming communication disconnection, by which the user can specify the time discretionally, considering hours of a conference. The automatic disconnection unit 402 sets a time limit T so as to be equivalent to a value specified on the pull-down menu 502, which will be used in a process illustrated in FIG. 6.

The display control unit 403 controls the display 205. The display control unit 403 displays images on the display 205 such as a screen for setting automatic disconnection, a screen for confirming communication disconnection, and a desktop screen.

The image transmission unit 404 transmits images being displayed on the display 205 to the image processing apparatus 110. Once communication with the image processing apparatus 110 has been established, the image transmission unit 404 transmits a display image on the display 205 supplied by the display control unit 403.

The image processing apparatus 110 includes a communication control unit 410, an image reception unit 411, an image processing unit 412, and a display unit 413.

The communication control unit 410 controls communication with the information processing apparatuses 120a, 120b, and 120c. In response to requests for connection from the information processing apparatuses 120a, 120b, and 120c, the communication control unit 410 establishes the communication.

The image reception unit 411 receives images transmitted by the information processing apparatuses 120a, 120b, and 120c. In response to receiving the images from the information processing apparatuses 120a, 120b, and 120c, the image reception unit 411 provides the received images to the image processing unit 412.

The image processing unit 412 processes the images to be displayed on the display 307. In response to receiving the images transmitted by the information processing apparatuses 120a, 120b, and 120c, the image processing unit 412 provides the images to the display unit 413 constituted with the display controller 306, and displays the images on the display 307.

Also, the image processing unit 412 generates a drawn image in response to a drawing operation performed by the user on the display 307. The image processing unit 412 displays on the display 307 a composite image that is obtained by combining the drawn image and images provided by the information processing apparatuses 120a, 120b, and 120c.

FIG. 6 is a flowchart illustrating an example of a process executed by the information processing apparatus 120a according to the embodiment. In the following, with reference to FIG. 6, a process executed by the information processing apparatus 120a when communication with the image processing apparatus 110 has been established, will be described.

The process in FIG. 6 starts with Step S600, and once the communication with the image processing apparatus 110 has been established, the automatic disconnection unit 402 activates a timer at Step S601. At Step S602, the automatic disconnection unit 402 determines whether the time limit T has expired on the timer. If the time limit T has expired on the timer (YES), the process goes forward to Step S603.

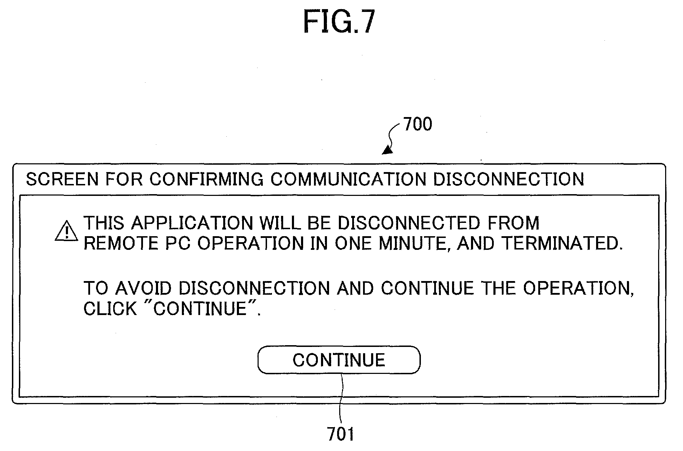

At Step S603, the automatic disconnection unit 402 has the display control unit 403 display a screen for confirming communication disconnection 700 on the display 205 as illustrated in FIG. 7. At Step S604, the automatic disconnection unit 402 determines whether a button 701 to command continuation of communication connection, which is displayed on the screen for confirming communication disconnection 700, has been selected. If the button 701 has been selected (YES), the process goes back to Step S601, and the timer is newly activated. On the other hand, if the button 701 has not been selected (NO), the process goes forward to Step S605.

At Step S605, the automatic disconnection unit 402 determines whether a predetermined time has elapsed since displaying the screen for confirming communication disconnection 700 has been started. In the embodiment, the predetermined time may be a fixed value, for example, one minute may be adopted as the time. If the predetermined time has not elapsed since displaying the screen for confirming communication disconnection 700 has been started (NO), the process goes back to Step S604. On the other hand, if the predetermined time has elapsed since displaying the screen for confirming communication disconnection 700 has been started (YES), the process goes forward to Step S606.

On the other hand, if the time limit T has not expired on the timer at Step S602 (NO), the process goes forward to Step S607. At Step S607, the automatic disconnection unit 402 determines whether there has been input on an input device of the information processing apparatus 120a. In the embodiment, the automatic disconnection unit 402 determines that there has been input on an input device, for example, if receiving an indication of a received event from the event reception unit 400, such as an event that a click signal or a movement signal of a mouse has been received, or an event that a signal of a key on a keyboard has been pressed;

If the automatic disconnection unit 402 determines that there has been input on an input device (YES), the process goes back to Step S601. On the other hand, if the automatic disconnection unit 402 determines that there has been no input on an input device (NO), the process goes forward to Step S608.

At Step S608, the automatic disconnection unit 402 determines whether the display 205 has been closed. Since the embodiment adopts, as the information processing apparatus 120a, a PC that includes an open-and-close display, the automatic disconnection unit 402 determines whether the display 205 has been closed.

In other embodiments, it may be determined whether the power of a monitor has been turned off, or whether displaying a locked screen or a screen saver has been started, namely, whether it is in a state in which a user operation on the information processing apparatus 120a can be received immediately. If the power of a monitor has been turned off, or displaying a locked screen or a screen saver has been started, the automatic disconnection unit 402 determines that it is not in a state in which a user operation on the information processing apparatus 120a can be received immediately.

If the display 205 has been closed (YES), the process goes forward to Step S606. On the other hand, if the display 205 has not been closed (NO), the process goes back to Step S602.

At Step S606, the automatic disconnection unit 402 has the communication control unit 401 disconnect the communication with the image processing apparatus 110. The process ends at Step S609.

In the embodiment illustrated in FIG. 6, a screen for confirming communication disconnection is displayed when the time limit T has expired on the timer. In other embodiments, the automatic disconnection unit 402 may calculate a physical distance between the information processing apparatus 120a, 120b, or 120c and the image processing apparatus 110, to display a screen for confirming communication disconnection if the distance becomes greater than or equal to a predetermined distance. A function to display a screen for confirming communication disconnection if the time limit T has expired on the timer, and a function to display a screen for confirming communication disconnection if the distance becomes greater than or equal to the predetermined distance, may be executed in parallel.

So far, an embodiment in the present disclosure has been described. Note that the present invention is not limited to the embodiment described above, but may be changed within a range that one skilled in the art can conceive, such that an element in the embodiment described above may be changed or deleted, or another element may be added to the elements in the embodiment described above.

The present application is based on and claims the benefit of priority of Japanese Patent Application No. 2014-002294, filed January 9, 2014, the contents of which are incorporated herein by reference in their entirety.

### [Description of the Reference Numeral]

- 100: image processing system
- 110: image processing apparatus
- 120a, 120b, 120c: information processing apparatus
- 130: access point
- 140: network

### [Related-Art Documents]

### [Patent Documents]

[Patent Document 1] Japanese Unexamined Patent Application Publication No. 2005-352796

## Claims

1. A computer-executable program executed by an information processing apparatus that provides an image, and has an image information processing apparatus display the image, the program causing a processor of the information processing apparatus to execute a process, the process comprising:
displaying a screen for confirming whether to continue communication with the image processing apparatus, on a display of the information processing apparatus, after a time specified by a user has elapsed since the communication with the image processing apparatus has been established; and
disconnecting the communication in a case where a command to continue the communication is not received from the user after the screen has been displayed.

2. The program according to claim 1, wherein the disconnecting includes a step for disconnecting the communication in a case where the command to continue the communication is not received from the user, and a predetermined time has elapsed since the screen has been displayed.

3. The program according to claim 1 or 2, the process further comprising:
disconnecting the communication when the display of the information processing apparatus has been closed.

4. The program according to claim 1 or 2, the process further comprising:
resetting a time measured for determining whether the time specified by the user has elapsed, to zero, in response to a user operation performed on the information processing apparatus.

5. An information processing apparatus that provides an image, and has an image processing apparatus display the image, the information processing apparatus comprising:
a display control unit configured to display a screen for confirming whether to continue communication with the image processing apparatus, on a display of the information processing apparatus, after a time specified by a user has elapsed since the communication with the image processing apparatus has been established; and
a communication control unit configured to disconnect the communication in a case where a command to continue the communication is not received from the user after the screen has been displayed.

6. The information processing apparatus according to claim 5, wherein the communication control unit disconnects the communication in a case where the command to continue the communication is not received from the user, and a predetermined time has elapsed since the screen has been displayed.

7. The information processing apparatus according to claim 5 or 6, wherein the communication control unit disconnects the communication when the display of the information processing apparatus has been closed.

8. The information processing apparatus according to claim 5 or 6, wherein the communication control unit resets a time measured for determining whether the time specified by the user has elapsed, to zero, in response to a user operation performed on the information processing apparatus.

9. An image processing system, comprising:
an image processing apparatus, and
an information processing apparatus that provides an image, and has the image processing apparatus display the image,
the information processing apparatus including
a display control unit configured to display a screen for confirming whether to continue communication with the image processing apparatus, on a display of the information processing apparatus, after a time specified by a user has elapsed since the communication with the image processing apparatus has been established, and
a communication control unit configured to disconnect the communication in a case where a command to continue the communication is not received from the user after the screen has been displayed.

10. The image processing system according to claim 9, wherein the communication control unit disconnects the communication in a case where the command to continue the communication is not received from the user, and a predetermined time has elapsed since the screen has been displayed.
